Europäisches Patentamt

European Patent Office

Office européen des brevets

(11) Publication number: **0 143 095**
**B1**

## EUROPEAN PATENT SPECIFICATION

(45) Date of publication of patent specification: **23.08.89**  (51) Int. Cl.⁴: **B 27 M 1/08**

(21) Application number: **84850319.9**

(22) Date of filing: **23.10.84**

(54) **Method for producing in wood a case for a telephone apparatus, a hand microtelephone or some other casing used within the telecommunications industry.**

(30) Priority: **16.11.83 SE 8306317**

(43) Date of publication of application:
**29.05.85 Bulletin 85/22**

(45) Publication of the grant of the patent:
**23.08.89 Bulletin 89/34**

(84) Designated Contracting States:
**AT DE FR GB IT NL**

(56) References cited:
**CH-A- 586 492**
**US-A-1 328 505**
**US-A-1 328 506**
**US-A-2 500 954**
**US-A-3 675 336**
**US-A-3 862 375**

(73) Proprietor: **Televerket**
**Televerkets Huvudkontor Fack**
**S-123 86 Farsta (SE)**

(72) Inventor: **Olofsson, Stig**
**Utsiktsvägen 11**
**S-149 01 Nynäshamn (SE)**

(74) Representative: **Karlsson, Berne et al**
**Televerkets Huvudkontor Patent Department**
**Fack**
**S-123 86 Farsta (SE)**

Courier Press, Leamington Spa, England.

## Description

### Technical field

The present invention relates to a method for producing part of a casing in wood, in particular in the form of a case for a telephone apparatus, a casing for a hand microtelephone or some other form of casing used within the telecommunication industry. As an example of another part of a casing, reference may be made to an apparatus casing intended to contain telecommunication components, for example an operator's console. In conjunction with the aforementioned casing for a hand microtelephone, the process is best applied to hand microtelephone casings which consist of two mating parts capable of being joined together at a dividing plane along the longitudinal section of the hand microtelephone.

### Description of the prior art

The execution of the cases for telephone apparatus or similar casings in wood is previously disclosed. The aforementioned casings are in that case intended to constitute a variant which is usually executed in a plastic material. The external volume of the wooden embodiment must in this case correspond essentially to the external volume of the casing executed in conventional types of material. The casing for telephone apparatus, for example, will thus require to be milled so as to provide it with an internal volume which is sufficiently great to accommodate the telecommunication components concerned. The execution of telephone apparatuses in wood is disclosed, although not in conjunction with requirement that they shall resemble the present-day modern design and with the simultaneous requirement in respect of their internal volume.

### Description of the present invention
### Technical problem

Because the external volume may not be increased to any great extent in relation to that of apparatuses constructed from conventional materials, and in view of the requirement for sufficiently large internal space to be provided to accommodate the components concerned which are to be contained therein, the finished casing will exhibit thin wall sections, for example at lead-throughs or at the holes for the push-buttons making up a keyset. For this purpose the embodiment of the apparatus must be capable of satisfying the requirements in respect of its strength which are imposed on, for example, a case for a telephone apparatus when the telephone apparatus is used in its normal environment. A telephone apparatus is subjected heavy-handed treatment within its normal field of use.

The wood used in the case for the telephone apparatus must be capable, furthermore, of withstanding moisture problems, and it is accordingly not permissible for cracking and deformation to occur in the wooden material as a result of moisture. The apparatus must also be able to exhibit a long service life.

### Solution

The present invention has as its principal object the presentation of a method for producing a casing of this kind which will solve the problem outlined in the above. What principally may be regarded as being characteristic of this novel method are that an initial piece of timber is dried for the duration of a drying period inside an oven or other space until the timber is just above its cell collapse limit, and that at the end of the drying period the temperature is adjusted in such a way as to cause the resin in the wood to flow out and seal the pith fibres of the wood with the intention of preventing the wood from re-absorbing moisture. Other characteristics are that from the timber dried in this way a blank is taken which is to form the part of the casing, that the blank is worked into the final shape of the part of the casing, that any weak points in the casing are reinforced, preferably by glued cross-lamination, with a reinforcing material in the form of wood or some other material, and that the pores of the wood are finally sealed with varnish.

In further developments of the idea of invention it is proposed that the timber shall be dried for a drying period of between 5 and 75 days, depending on the type of wood used. Drying should take place preferably in the form of cycles consisting of heating and the creation of a vacuum.

During an initial phase of the drying period the timber is heated to the first temperature as far as the core itself. After having been heated through in this way, the timber is subjected to a vacuum for a first period. With the help of this vacuum the moisture moves away from and out of the inside of the timber and is removed via its external surface. A cycle of this kind, which thus consists of the aforementioned thorough heating and exposure to vacuum, is followed by a number of similar cycles during the drying period.

The timber should preferably be dried to such an extent that it has a moisture content of only about 4—5 per cent by weight in its finished-dried state. A first temperature of about 50°C is used during the periods of the aforementioned cycles when the timber is being heated. At the end of the full drying period the temperature is increased to about 65°C in order to achieve the aforementioned outflow of the resin from the wood.

In the aforementioned further developments of the idea of invention it is proposed that the blank shall form a solid unit or shall be composed (glued together) from two or more pieces of wood taken from the same plank or length of wood. By glueing together two or more pieces of wood, a saving in timber will be achieved which is significant from practical manufacturing point of view. Furthermore it will be possible to take a better selection of the wood with regard to the volume of timber and the pattern of the veins in the wood.

The aforementioned further developments also extend to the blocking of any internal stresses present in the wood attempting to deform and crack the wood with the help of reinforcing element, for instance solid wood or veneer, etc.,

attached to the surface of the affected casing, whereby in the latter case of veneer use is made preferably of cross-laminated veneer.

The production of the basic shape of the part of the casing, i.e. the milling or pressing of the internal cavity of the casing, should preferably be done by mechanical means.

When applying the process to the production of hand microtelephones in wood, the hand microtelephone should preferably be made in the form of two long components which are capable of being joined together along a longitudinal section or at a dividing plane in the longitudinal sense of the hand microtelephone. In order to permit the aforementioned two components to be held together by means of clamping organs, the aforementioned long components are so executed as to exhibit different curved shapes at the joining section, in which case the curved shape for the upper part will exhibit a smaller radius than the corresponding radius of the lower part. The long components are held tightly together by means of securing screws in such a way that contact is provided over the entire longitudinal section, which means that reliable sealing will exist at the microphone and ear-phone components.

The assembly of the aforementioned microphone and ear-phone components should be effected preferably by means of assembly screws which are capable of intracting via a metal bushing arranged in the corresponding component concerned. It is possible in this way to avoid the use of wood screws, which means that the components can be dismantled and assembled a number of times without damaging the wooden material, which would be the case if wood screws had been used in the handle at its point to the ear-phone and microphone components. A further embodiment involves the use of marking of the case concerned or the casing concerned with the help of so-called hot-embossing.

## Advantages

The use of the process described above for producing parts of a casing in this kind enables them to be used subsequently in their normal operating environment without the need to impose special requirements from the point of view of handling, temperature and/or moisture. Thus, for example, a telephone apparatus may be executed with an apparatus case in a fine-quality wood and may at the same time be utilized as a subscriber apparatus capable of satisfying all the requirements which apply to such an apparatus with regard to its strength. Also eliminated by the use of this process is the risk of cracking in the part of the casing, even if the apparatus is used in comparatively damp areas. The apparatus is able in this way to retain its finish and the surface characteristics which make it attractive from the user's point of view.

This process permits production in types of wood which are of interest in this connection, such as mahogny, walnut, curly-grained birch, wavy-grained birch, sycamore, cherry or African rosewood, etc.

## Description of the drawing

A preferred embodiment of a method exhibiting the significant characteristic features of the invention is described below with simultaneous reference to the accompanying drawings, in which;

Figure 1 shows a flow diagram for the production of parts of a casing, for example in the form of cases for telephone apparatus and casings for hand microtelephones, etc.;

Figure 2 shows in vertical section an example of the construction of a case for a telephone apparatus executed in accordance with the novel method;

Figure 2a shows in vertical section a detail of the case in accordance with Figure 2;

Figure 3 shows a vertical section through a hand microtelephone which has been executed in accordance with the novel method; and

Figures 4 shows a detail of a component, for example on a case for a telephone apparatus, having a free end surface.

## Description of the preferred embodiment

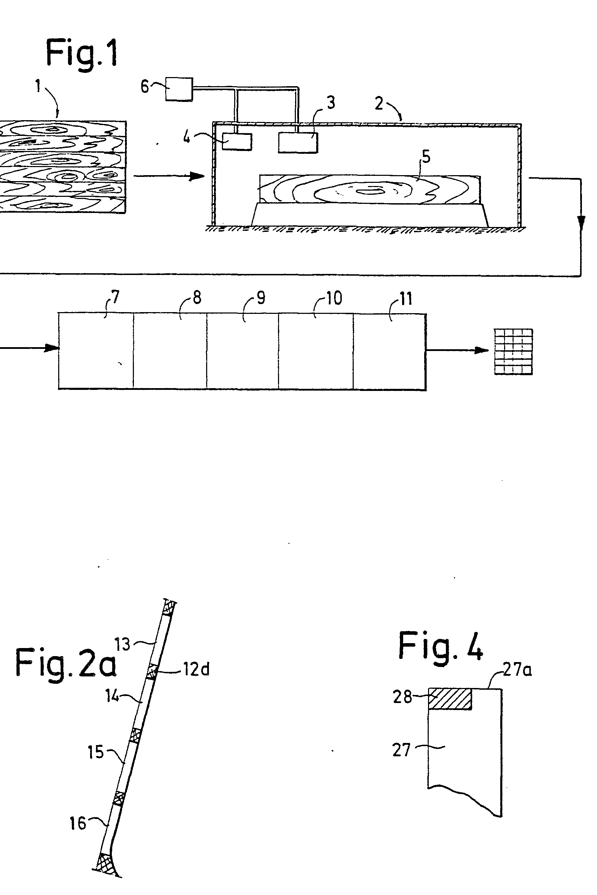

In Figure 1 a laminated piece of timber is indicated by the reference designation 1. The timber can be of any desired type of wood, preferably being a fine-quality wood, and may consist of mahogny, for example. Although the novel method is described here in relation to mahogny, it is also capable of being used with other types of wood, for example the types of wood referred to above. Figure 1 also illustrates a plant for so-called vacuum drying 2. The aforementioned plant incorporates temperature-control organs 3 and vacuum-producing organs 4. The plant is equipped in a previously disclosed fashion with one or more openable and closable flaps, doors or similar. The vacuum plant 2 is so arranged as to accommodate one or more pieces of timber, for example one or more planks 5, which are to be dried inside the plant 2 during a drying period.

The aforementioned drying period is selected in accordance with the type of wood and is intended to provide thorough drying of the timber planks 5 concerned. The invention is in this case based on the concept that the timber is to be dried to an extremely low moisture content this being a moisture content which lies just above the cell collapse limit of the timber.

In detail the drying procedure is as follows. Once the piece of timber or plank concerned has been introduced into the plant, it is heated for a long period so that the timber is heated through to the core itself. Once the timber has been introduced into the plant and the latter has been closed, the temperature control organs 3 are switched on in order to provide a temperature preferably of about 50°C. In the case of mahogny, the aforementioned thorough heating will last for about one day. Once the thorough heating process is complete the plant 2 is subjected to a vacuum by activating the vacuum-producing organs 4. The control of the aforementioned temperature-control organs and vacuum-producing organs can take place automatically in a previously disclosed fashion, for example with the help of regulating organs 6.

The timber is then left under vacuum inside the plant 2 for a short time, for example 10—12 minutes. When the pressure is reduced, the result will be evaporation at the surface, which means that the surface will become colder and moisture will be driven off from it. The temperature difference and the pressure difference which occur in this case mean that moisture will move from the inside of the wood towards the outside, said movement continuing until the surface has cooled. The vacuum is interrupted after the aforementioned short period and is followed by a new cycle consisting of a heating period and renewed vacuum application, and so on, until an outstandingly high degree of drying of the timber has been achieved. The aforementioned drying process is allowed to continue in accordance with the invention for an unusually long period and until the timber is just above the cell collapse limit. The timber should preferably be dried to such an extent that the residual moisture content is only about 4—5 per cent by weight, which must be compared with normal timber drying processes which aim at residual moisture contents of 6—8 per cent by weight.

A major special characteristic of the invention is that at the end of the aforementioned drying period the temperature is increased from the aforementioned 50°C to 65°C for a short period in relation to the total drying time. During the last-mentioned increase in the temperature there is achieved, thanks to the increased temperature, an out-flowing of the resin in the wood. This takes place with the intention of sealing the pith fibres of the wood. In this way moisture is prevented or discouraged from once more entering the core of the wood or the timber. Nevertheless, a certain degree of re-absorption of moisture is permissible during the subsequent processing of the timber described below. The aforementioned re-absorption of moisture is limited, however, to the outer parts of the timber or the wood, and the aforementioned flowing out of the resin enables the wood to be kept in its essentially desiccated state.

The considerable degree of desiccation throughout all parts of the timber means that stresses within the wood are avoided to a very great extent. The aforementioned stresses would otherwise lead to cracking and impaction of the timber. The aforementioned re-absorption of moisture by the outer parts of the wood or the timber is gradually balanced out and reduced and thus does not exert any negative effect in the aforementioned respect.

In Figure 1 various processing stations are indicated by the reference designations 7, 8, 9 10 and 11. At the aforementioned processing stations the timber which has been dried in this way is sawn into blanks which are to form the finished wooden objects in question. The aforementioned sawing can occur at station 7. Different blanks which together are to form an object can also be produced at the aforementioned station 7. Each blank can be in the form of a single piece taken from the dried timber. The blank may thus consist of two more pieces glued together which in this case have been taken from the same piece of timber or plank.

At a station 8 the milling of the blank takes place in such a way that the contours of the object are produced in rough form. Station 9 is a processing station for detailed processing (for example, including sanding). Station 10 is an assembly station for the different finished details. Station 11 is a varnishing station.

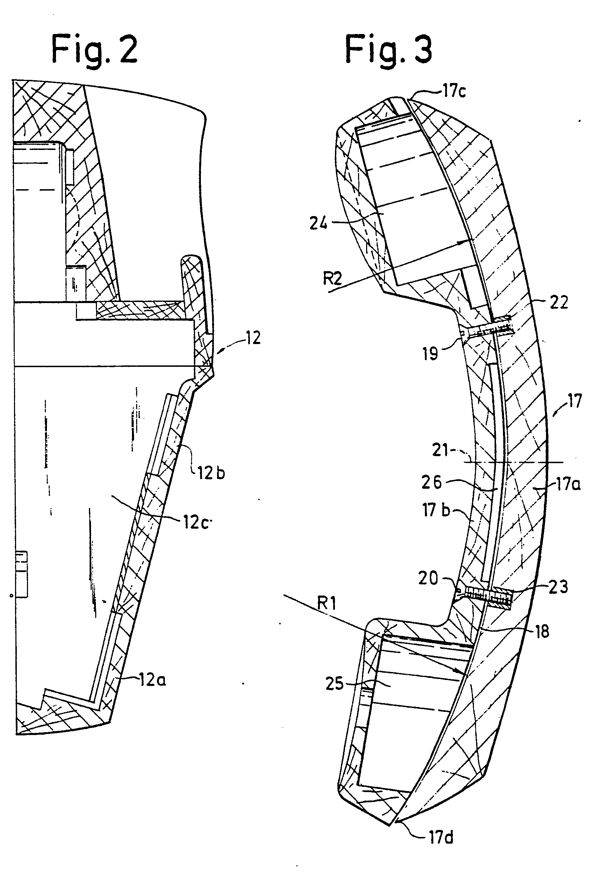

Figure 2 shows a vertical section through a case for a telephone apparatus, the external shape of which is at least essentially previously disclosed. Figure 2a shows a parallel section through the case in question. The parallel section in this case is taken in such a way that it extends through the keyset of the telephone apparatus. The casing is indicated by the reference designation 12 and since its form is assumed to be as shown, it is not proposed to describe it in any greater detail here. What may be established, however, is that the casing includes the parts 12a and 12b in which the thickness of the material is comparatively small, for example about 3 mm. The casing in accordance with Figure 2 is capable of being connected to a component not shown here which belongs to the telephone apparatus in question. The component and the casing are intended in this case to contain telecommunications equipment which extends at least essentially into the casing cavity 12c. The thickness of the material at the part 12d in accordance with Figure 2 is also essentially reduced. The aforementioned parts 12d are arranged in such a way as to provide rows and columns of holes 13, 14, 15 and 16. The strings of parts 12d are reinforced in this case by means of reinforcing elements not illustrated specifically, consisting for example of glued and cross-laminated veneer. The strings of parts 12d which are cut in the longitudinal direction of the wood are provided with reinforcement in this case from the aforementioned reinforcing elements, the transverse direction of which extends at right angles to the aforementioned direction of the wood. The actual wood of the case in this instance absorbs stresses in one principal direction, whilst the reinforcing element absorbs stresses in the other direction. Thin areas of material in the case can be reinforced in a similar fashion.

Figure 3 shows a casing in the form of a hand microtelephone having a previously disclosed external shape. The hand microtelephone 17 consists in principle of two parts which are capable of being connected together at a dividing plane 18 which extends in the longitudinal sense of the components 17a and 17b and at right angles to the plane of the paper in Figure 3. The dividing plane has a curved shape in the aforementioned plane of the paper. The upper part 17a is in this case provided with a radius R1 which is smaller than the corresponding radius R2 of the other component 17b. This arrangement of different radii means that the components can be held together by means of securing organs 19 and 20 which are positioned close to the centre 21 of the hand microtelephone, at the same time ensuring reliable contact along the entire dividing plane of the components. In spite of the comparatively central positioning of the securing organs 19 and 20, reliable sealing is achieved, amongst other things, at the outer ends 17c and 17d. The aforementioned securing organs consist in this case of cylindrical screws which are capable of being screwed into bushings 22, 23 executed preferably in metal.

The ear-phone component of the hand microtelephone comprises a first space 24 for the ear-piece unit and a second space 25 for the microphone components. Also present inside the hand microtelephone is a long groove 26 to accommodate the wires between the components.

In Figure 4 is shown a free end edge 27 of the case for a telephone apparatus in accordance with Figure 2. In order to prevent the wood from cracking from the end edge 27a as a result of impact, the end edge can be reinforced by means of a reinforcing element 28 preferably in wood of the same or a different type. In the case shown here the reinforcing element 28 is let into the component 27 but may, of course, also be so arranged as to extend over the entire surface 27a. The reinforcing element is provided in order to block effectively any internal stresses in the wood which are present as a result of the blank having been taken from those parts of the timber or the plank in which the veining is oblique, in such a way that the stresses will not cause the aforementioned cracking or warping in the wood.

The invention is not restricted to the embodiment described above by way of example, but may undergo modifications within the context of the following Patent Claims. .

## Claims

1. Method for producing part of a casing in wood, in particular in the form of a case (12) for a telephone apparatus, a casing (13) for a hand microtelephone or some other form of casing used within the telecommunications industry, characterized in that a piece of timber is dried for the duration of a drying period inside an oven (2) until the timber is just above its cell collapse limit, in that at the end of the drying period the temperature is adjusted in such a way as to cause the resin in the timber to flow out and seal the pith fibres of the wood with the intention of preventing the wood iron re-absorbing moisture, in that from the timber dried in this way is taken a blank which is to form the part of the casing, in that the blank is worked into the final shape of the part of the casing, in that any weak point in the casing is reinforced, preferably by glued cross-lamination, with a reinforcing material in the form of wood or some other material, and in that the pores of the wood are then sealed with varnish.

2. Method in accordance with Patent Claim 1, characterized in that the timber (5) is heated to a first temperature as far as the core itself, in that the timber is subjected to a vacuum for a short period, and in that this cycle is repeated until the drying has reached a value which lies immediately above the aforementioned cell collapse limit.

3. Method in accordance with Patent Claims 1 or 2, characterized in that the timber (5) is dried to such an extent that it has a moisture content of only about 4—5 per cent by weight.

4. Method in accordance with Patent Claims 1, 2 or 3, characterized in that throughout most of the aforementioned drying period an initial temperature of about 50°C is used, and in that at the end of the drying period an increased second temperature of about 65°C is used.

5. Method in accordance with any of the preceding Patent Claims, characterized in that a period of between 5 and 75 days is selected as the drying period for the timber.

## Patentansprüche

1. Verfahren zur Herstellung eines Teiles eines Gehäuses aus Holz, insbesondere in Form eines Gehäuses (12) für einen Telefonapparat, ein Gehäuse (13) für ein Handmikrotelefon oder eine andere Form von Gehäuse, das in der Telekommunikationsindustrie verwendet wird, dadurch gekennzeichnet, daß ein Holzstück während einer Trocknungszeit innerhalb eines Ofens (2) getrocknet wird, bis das Holz gerade an seiner Zellzusammenbruchsgrenze ist, daß am Ende der Trocknungszeit die Temperatur derart eingestellt wird, um das Harz des Holzes ausfließen zu lassen und die Markfasern des Holzes zu versiegeln, mit der Absicht, das Holz an der Reabsorption von Feuchtigkeit zu hindern, daß das so getrocknete Holz als Rohling verwendet wird, um den Teil des Gehäuses zu bilden, daß der Rohling zu der endgültigen Form des Teiles des Gehäuses verarbeitet wird, daß jeglicher Schwachpunkt im Gehäuse verstärkt wird, vorzugsweise durch verklebte Kreuzlamination, und zwar mit einem Verstärkungsmaterial in Form von Holz oder einem anderen Material, und daß die Poren des Holzes dann mit Lack versiegelt werden.

2. Verfahren nach Anspruch 1, dadurch gekennzeichnet, daß das Holz (5) auf eine erste Temperatur wie der Kern erwärmt wird, daß das Holz eine kurze Zeitspanne einem Vakuum ausgesetzt wird und daß der Zyklus wiederholt wird, bis die Trocknung einen Wert erreicht hat, der unmittelbar oberhalb der erwähnten Zellzusammenbruchsgrenze liegt.

3. Verfahren nach Anspruch 1 oder 2, dadurch gekennzeichnet, daß das Holz in einem solchen Ausmaß getrocknet wird, daß es einen Feuchtgehalt von nur etwa 4 bis 5 Gew.% hat.

4. Verfahren nach Anspruch 1, 2 oder 3, dadurch

gekennzeichnet, daß während der größten Zeit der erwähnten Trockenperiode eine Anfangstemperatur von etwa 50°C verwendet wird und daß am Ende der Trockenperiode eine erhöhte zweite Temperatur von etwa 65°C verwendet wird.

5. Verfahren nach einem der vorhergehenden Ansprüche, dadurch gekennzeichnet, daß ein Zeitraum zwischen 5 und 75 Tagen als Trockenperiode für das Holz ausgewählt ist.

## Revendications

1. Procédé de fabrication d'un élément de boîtier en bois, en particulier sous la forme d'un boîtier (12) pour un téléphone, d'un boîtier (13) pour un micro-téléphone à main ou toute autre forme d'enveloppe utilisée dans l'industrie des télécommunications, caractérisé en ce qu'on sèche une pièce de bois pendant la durée d'une période de séchage à l'intérieur d'un four (2) jusqu'à ce que le bois soit juste au-dessus de sa limite d'affaissement des cellules; en ce que, à la fine de la période de séchage, on règle la température de manière que la résine du bois s'écoule et obture les fibres de sève du bois dans le but d'empêcher le bois de réabsorber l'humidité; en ce que, à partir du bois séché de cette façon, on extrait une ébauche qui doit former l'élément de boîtier; en ce qu'on amène l'ébauche à la forme finale de l'élément de boîtier; en ce qu'on renforce tout point faible du boîtier, de préférence par contre-collage croisé, au moyen d'une matière de renforcement sous la forme de bois ou d'une autre matière; et en ce qu'on obture ensuite les pores du bois avec un vernis.

2. Procédé suivant la revendication 1, caractérisé en ce qu'on chauffe la pièce de bois (5) à une première température, jusqu'à l'âme elle-même; en ce qu'on soumet la pièce de bois à un vide pendant une courte durée; et en ce qu'on répète ce cycle jusqu'à ce que le séchage ait atteint une valeur qui se situe juste au-dessus de la limite précitée d'affaissement des cellules.

3. Procédé suivant la revendication 1 ou 2, caractérisé en ce qu'on sèche la pièce de bois (5) à un degré tel qu'elle ait une teneur en humidité de 4 à 5% en environ en poids seulement.

4. Procédé suivant les revendications 1, 2 ou 3, caractérisé en ce que, pendant la plus grande partie de la période de séchage précitée, on utilise une température initiale de 50°C environ, et en ce que, à la fin de la période de séchage, on utilise une deuxième température, plus élevée, dé 65°C environ.

5. Procédé suivant l'une quelconque des revendications précédentes, caractérisé en ce qu'on choisit une période comprise entre 5 et 75 jours comme période de séchage pour le bois.

# Fig.1

# Fig.2a

# Fig. 4

# Fig. 2

# Fig. 3